# FASCICULE DE BREVET EUROPEEN

(11) **EP 0 616 336 B1**
(45) Date de publication et mention de la délivrance du brevet: **30.10.1996**
(21) Numéro de dépôt: 94400505.7
(22) Date de dépôt: 08.03.1994
(51) Int. Cl.: G21C 13/036

(54) **Procédé et dispositif de remplacement d'un adaptateur de traversée du couvercle de la cuve d'un réacteur nucléaire**
Verfahren und Vorrichtung zum Austausch einer Adapterdurchführung eines Kernreaktorgefässdeckels
Method and device for replacing an adapter for a nuclear reactor vessel closure crossing

(30) Priorité: 15.03.1993 FR 9302955
(43) Date de publication de la demande: 21.09.1994
(73) Titulaire: FRAMATOME, 92400 Courbevoie (FR)
(72) Inventeur: Cayment, Michel, F-71370 Saint Germain du Plain (FR); Batistoni, Michel, F-71640 Le Bourg (FR)
(74) Mandataire: Bouget, Lucien

(56) Documents cités:
- EP-A- 0 440 353
- FR-A- 2 069 737
- US-A- 3 240 514
- US-A- 5 070 600
- KERNENERGIE, vol.15, no.8, Août 1972, BERLIN A: SCHÖNHERR ET AL. 'Überblick über die Durchführung und die Ergebnisse der teilwesen Reaktorrevision 1971 im Kernkraftwerk Rheinsberg'

## Description

L'invention concerne un procédé de remplacement d'un adaptateur de traversée du couvercle de la cuve d'un réacteur nucléaire refroidi par de l'eau sous pression.

Les réacteurs nucléaires à eau sous pression comportent généralement une cuve renfermant le coeur du réacteur qui est plongé dans l'eau sous pression de refroidissement du réacteur.

La cuve du réacteur de forme générale cylindrique comporte un couvercle de forme hémisphérique qui peut être rapporté sur sa partie supérieure.

Le couvercle est percé d'ouvertures au niveau de chacune desquelles est fixée une pièce tubulaire de traversée constituant un adaptateur assurant le passage de la commande de déplacement d'un prolongateur d'une grappe de contrôle de la réactivité du coeur ou un passage de traversée d'un moyen de mesure à l'intérieur du coeur, tel qu'une colonne de thermocouples. La pièce tubulaire est généralement frettée à l'intérieur de l'ouverture du couvercle et fixée de manière étanche par une soudure déposée dans un chanfrein usiné sur la surface interne concave du couvercle de cuve, autour de l'ouverture de traversée de l'adaptateur. Sur la partie d'extrémité de chacun des adaptateurs est fixé un mécanisme de commande de déplacement d'une grappe de contrôle de la réactivité du coeur ou un moyen de support d'une colonne de thermocouples. A l'intérieur de chacun des adaptateurs de traversée du couvercle de cuve assurant le passage d'un prolongateur d'une grappe de contrôle de réactivité, est fixée, dans une position coaxiale par rapport à l'adaptateur tubulaire et avec un certain jeu radial, une manchette thermique qui comporte une partie élargie diamétralement venant reposer sur une portée d'appui située à la partie supérieure de l'alésage de l'adaptateur.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire.

On contrôle par exemple l'état des pièces de traversée du couvercle de la cuve, pour s'assurer de l'intégrité de ces pièces, après un certain temps de fonctionnement du réacteur, en particulier dans la zone où ces pièces tubulaires sont soudées sur le couvercle de cuve.

Ces contrôles et réparations sont effectués lors d'un arrêt du réacteur nucléaire, le couvercle de la cuve étant démonté et déposé sur un stand de contrôle et d'intervention.

Le couvercle est déposé sur le stand de contrôle et d'intervention dans une position correspondant à sa position de service, la surface externe convexe du couvercle étant dirigée vers le haut et la surface interne concave dirigée vers le bas.

La présence de défauts sur les adaptateurs, qui peuvent être constitués, dans certains cas, par des fissures, peut également être détectée lors d'essais à chaud et en pression de la cuve du réacteur nucléaire.

Dans certains cas exceptionnels, on peut se trouver en présence de défauts constitués par des fissures traversant la paroi de l'adaptateur.

Dans le cas où des défauts sont décelés, il est nécessaire d'effectuer une réparation sur le stand de contrôle et d'intervention, avant de replacer le couvercle en position de service sur la cuve du réacteur nucléaire.

Dans certains cas, en particulier dans le cas très rare où une fissure d'un adaptateur serait traversante, il est nécessaire, soit de remplacer le couvercle de cuve intégralement, soit de remplacer l'adaptateur défectueux par un adaptateur neuf.

Il est bien évident que le remplacement intégral du couvercle est une opération extrêmement coûteuse et qui nécessite d'avoir en réserve un couvercle complet sur le site du réacteur nucléaire.

L'opération de remplacement d'un adaptateur défectueux par un adaptateur neuf qui nécessite une élimination par usinage de la partie inférieure de l'adaptateur à remplacer et de la soudure de fixation au couvercle ainsi qu'un soudage de l'adaptateur de remplacement est longue et délicate à réaliser, en particulier du fait que la surface interne du couvercle présente une radio-activité importante.

Une telle intervention qui nécessite la mise en place d'une structure de protection peut s'avérer longue et coûteuse.

Le but de l'invention est donc de proposer un procédé de remplacement d'un adaptateur de traversée du couvercle de la cuve d'un réacteur nucléaire de forme bombée, disposé après démontage, de manière à présenter une surface externe convexe dirigée vers le haut et une surface interne concave dirigée vers le bas, chacun des adaptateurs ayant une disposition verticale et étant fixé dans une ouverture de traversée du couvercle par une soudure au voisinage de la face interne concave et portant un équipement reposant sur une extrémité de l'adaptateur saillante à l'extérieur du couvercle, le procédé consistant à usiner une partie inférieure de l'adaptateur à remplacer, au voisinage de la surface interne du couvercle et une partie au moins de la soudure de fixation de l'adaptateur, à extraire l'adaptateur à remplacer de l'ouverture du couvercle, à introduire et à fixer un adaptateur de remplacement dans l'ouverture et à souder l'adaptateur de remplacement sur le couvercle, ce procédé pouvant être mis en oeuvre de manière simple et permettant de réduire le coût de l'opération de remplacement.

Dans ce but, le remplacement est réalisé depuis une zone d'intervention située au-dessus de la face convexe du couvercle et on effectue l'une au moins des opérations d'usinage de l'adaptateur à remplacer après démontage de l'équipement reposant sur sa partie supérieure et/ou de soudage de l'adaptateur de remplacement, en introduisant un outillage approprié par l'extrémité supérieure de l'adaptateur.

Afin de bien faire comprendre l'invention, on va maintenant décrire, à titre d'exemple non limitatif, en se référant aux figures jointes en annexe, un mode de mise en oeuvre du procédé de remplacement d'un adaptateur du couvercle de cuve d'un réacteur nucléaire à eau sous pression, selon l'invention.

La figure 1 est une vue en coupe partielle par un plan vertical du couvercle de la cuve d'un réacteur nucléaire à eau sous pression.

La figure 2 est une vue en élévation et en coupe d'un couvercle de cuve pendant une opération de remplacement d'un adaptateur de traversée.

La figure 3 est une vue de dessus suivant 3 de la figure 2.

La figure 4 est une vue en coupe par un plan vertical d'un dispositif d'usinage introduit dans un adaptateur de traversée du couvercle de la cuve pour réaliser un usinage dans le cadre d'une opération de remplacement de l'adaptateur.

La figure 5 est une vue en élévation latérale et en coupe du dispositif d'usinage représenté sur la figure 4, à la fin d'une opération d'usinage de la partie inférieure de l'adaptateur à remplacer.

La figure 6 est une vue en élévation et en coupe d'un dispositif d'usinage d'un chanfrein de soudage en position de service à l'intérieur d'un adaptateur à remplacer.

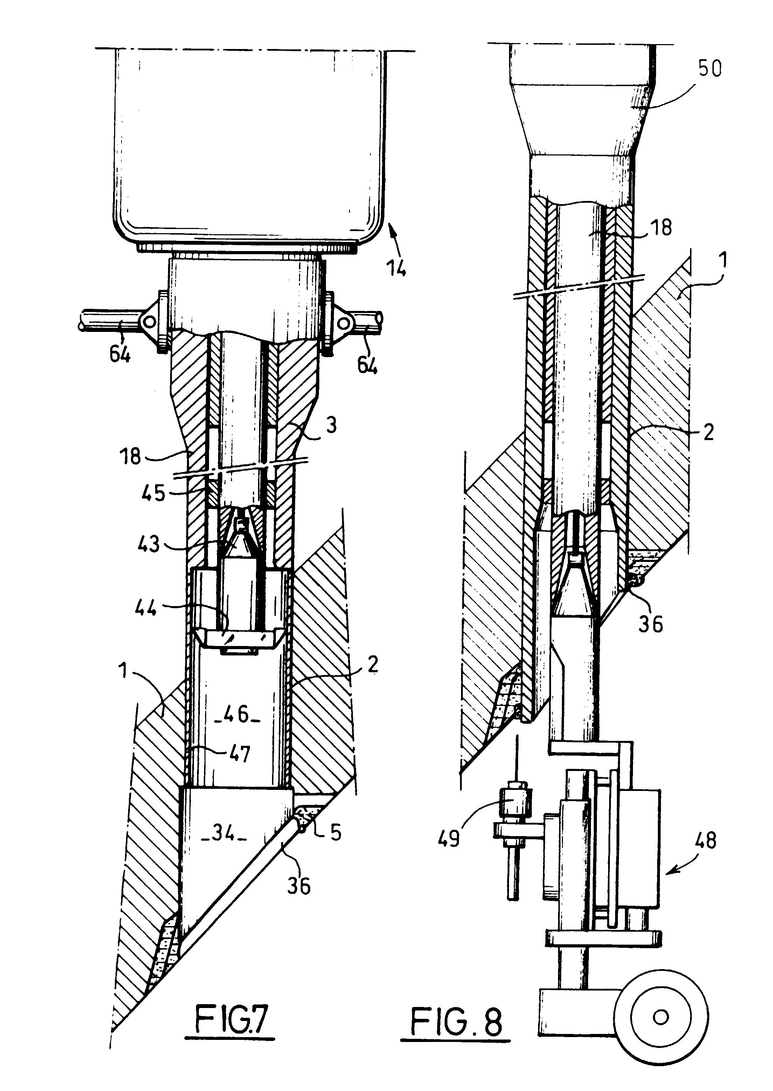

La figure 7 est une vue en élévation et en coupe d'un dispositif d'usinage de la partie supérieure d'un adaptateur à remplacer.

La figure 8 est une vue en élévation et en coupe d'une machine de soudage d'un adaptateur de remplacement.

La figure 9 est une vue en élévation et en coupe d'une variante de la machine de soudage représentée sur la figure 8.

La figure 10 est une vue en coupe de la partie inférieure d'un adaptateur de remplacement soudé sur le couvercle d'une cuve.

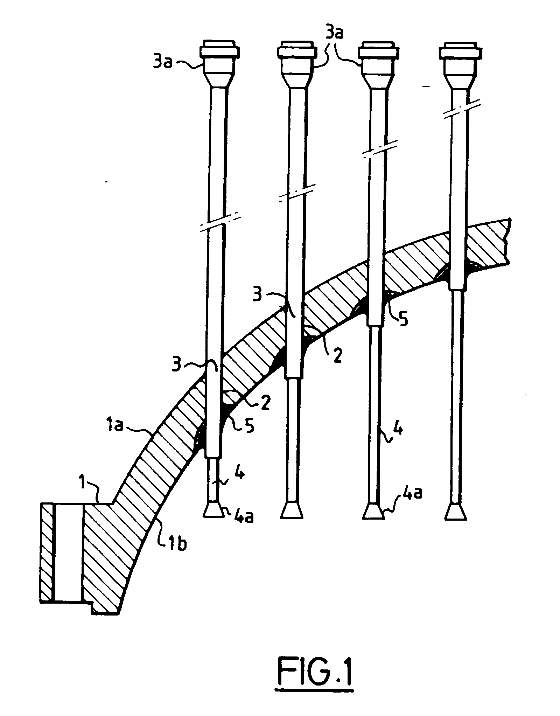

Sur la figure 1, on voit le couvercle 1 d'une cuve d'un réacteur nucléaire à eau sous pression présentant une forme hémisphérique et comportant une surface externe convexe la et une surface interne concave 1b.

Le couvercle 1 a été représenté dans la position qu'il occupe lorsqu'il est posé sur le plan de joint de la cuve du réacteur nucléaire ou sur un stand de contrôle et de réparation.

Le couvercle 1 est traversé par des ouvertures 2 dont les axes sont parallèles et de direction verticale, dans la disposition du couvercle représentée sur la figure 1.

A l'intérieur de chacune des ouvertures 2, est fixé un adaptateur 3 de forme tubulaire comportant une partie supérieure élargie 3a sur laquelle on peut fixer un mécanisme de déplacement d'une grappe de contrôle de la réactivité du réacteur ou un dispositif d'appui et de serrage d'une colonne de thermocouples (non représentés sur la figure 1).

A l'intérieur des adaptateurs assurant la traversée d'une tige de commande d'une grappe de contrôle de la réactivité, sont également disposées des chemises thermiques telles que 4 qui reposent par une partie supérieure élargie sur une portée d'appui à l'intérieur de la partie 3a de l'adaptateur.

Les adaptateurs 3 présentent un diamètre externe nominal légèrement supérieur au diamètre des ouvertures 2 et sont frettes à l'azote à l'intérieur des ouvertures 2 puis fixés de manière étanche par une soudure annulaire 5 déposée à l'intérieur d'un chanfrein usiné dans la surface interne concave 1b du couvercle de cuve 1.

Les chemises thermiques 4 comportent une partie saillante par rapport à la partie inférieure de l'adaptateur portant un cône d'engagement évasé 4a assurant la réintroduction des tiges de commande des grappes de contrôle dans les adaptateurs, lors de la pose du couvercle 1 sur le plan de joint de la cuve.

Les parties évasées 4a de l'ensemble des adaptateurs de traversée des tiges de commande sont situées à un même niveau dans la direction verticale, alors que les parties d'extrémité inférieures des adaptateurs sont situées à des niveaux différents suivant leur position sur le couvercle de cuve, du fait de la forme hémisphérique du couvercle.

Les adaptateurs de traversée des couvercles de cuve des réacteurs nucléaires à eau sous pression sont généralement réalisés en un alliage de nickel, le couvercle de cuve étant lui-même réalisé en acier. Une couche de "beurrage" en acier inoxydable est déposée sur la surface interne concave 1b du couvercle de cuve et dans le fond des chanfreins dans lesquels sont déposées les soudures 5 de fixation des adaptateurs.

Après un certain temps de fonctionnement du réacteur nucléaire, on s'est aperçu que certains adaptateurs risquent de présenter des fissures, en particulier dans la zone des soudures 5 sur le couvercle de cuve.

Dans certains cas, il est nécessaire d'effectuer un changement complet de l'adaptateur présentant une fissure, de manière à pouvoir garantir une sécurité parfaite du couvercle de cuve pendant le fonctionnement du réacteur nucléaire.

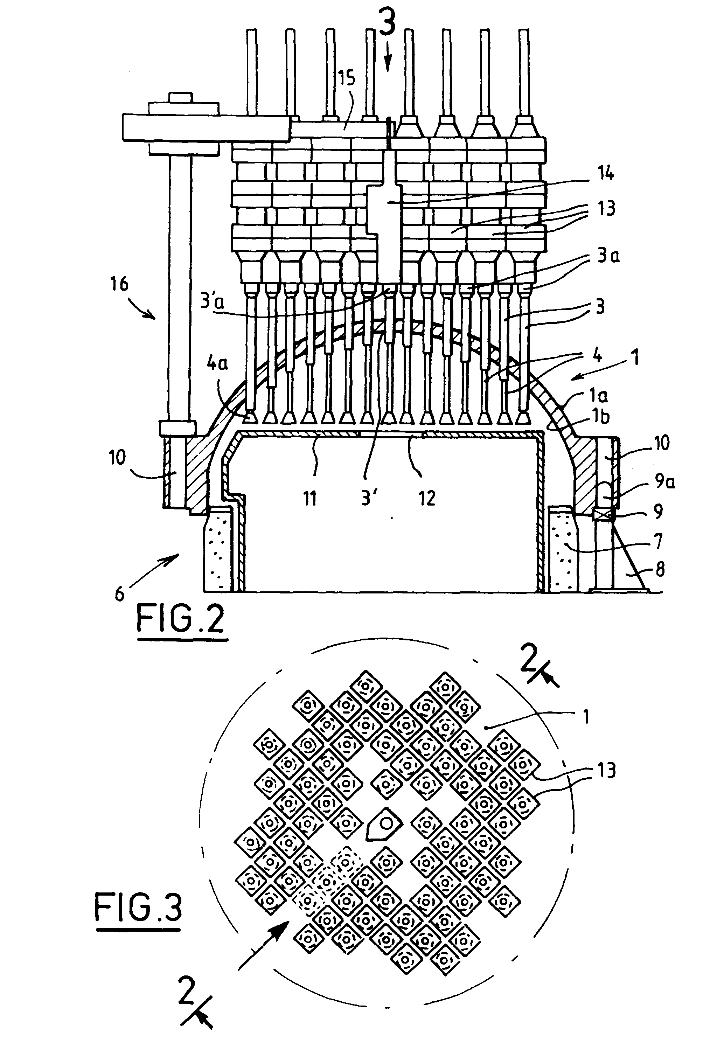

Pour effectuer un tel remplacement, le couvercle est déposé sur un stand de réparation 6 tel que représenté sur la figure 2.

Le couvercle 1 vient reposer sur un massif 7 du stand de réparation, de manière que sa surface supérieure convexe la soit dirigée vers le haut et sa surface inférieure concave 1b vers le bas et vers l'intérieur du poste de réparation 6.

Le massif 7 comporte en particulier des voiles 8 de direction radiale par rapport au couvercle 1 sur lesquels sont fixées des colonnes 9 dont l'extrémité supérieure 9a constitue un pion d'engagement d'une ouverture de passage 10 d'un goujon de fixation du couvercle de cuve 1.

Le poste de réparation 6 comporte également une enceinte de protection biologique 11 dont la partie supérieure constitue une platine horizontale située immédiatement en-dessous des cônes d'engagement 4a des manchettes thermiques 4 disposées à l'intérieur des adaptateurs 3 assurant le passage d'une tige de commande d'une grappe de contrôle.

La protection biologique 11 permet d'effectuer certaines opérations en-dessous de la surface inférieure 1b du couvercle, à travers une ouverture telle que 12, malgré la radio-activité importante de la face inférieure interne du couvercle 1.

Sur la figure 2, on a représenté le couvercle 1 après sa dépose sur le stand de réparation 6, dans une phase initiale du procédé de remplacement d'un adaptateur 3' placé dans une position centrale sur le couvercle de cuve.

Les mécanismes 13 fixés sur les parties d'extrémité supérieures 3a des adaptateurs 3 sont disposés côte à côte et suivant un réseau à mailles carrées, comme il est visible sur la figure 3.

Préalablement à une intervention sur un adaptateur tel que l'adaptateur 3', pour effectuer son remplacement par un adaptateur neuf, il est nécessaire de démonter le mécanisme 13 de cet adaptateur 3' ainsi que la manchette thermique disposée à l'intérieur de l'adaptateur.

Ces opérations sont réalisées par le dessus du couvercle, ce qui présente des avantages en ce qui concerne les dimensions des outillages d'intervention à utiliser et la simplicité de la mise en oeuvre de l'opération de remplacement ; en conséquence, les coûts relatifs au remplacement sont réduits.

Pour effectuer le remplacement de l'adaptateur 3', il est nécessaire d'effectuer l'usinage de certaines parties de l'adaptateur et de la surface interne 1b du couvercle.

Pour cela, on utilise une machine 14 qui vient reposer et qui est fixée sur la partie supérieure 3'a de l'adaptateur 3' dont on effectue le remplacement et à l'extrémité d'un bras télescopique 15 par sa partie d'extrémité supérieure afin d'être maintenue de manière stable pendant les opérations d'usinage, dans le prolongement de l'adaptateur 3'.

Le bras télescopique 15 constitue un élément d'une potence 16 qui est engagée et fixée dans une ouverture 10 destinée au passage d'un goujon de fixation du couvercle de cuve 1.

Afin de mettre en place le bras 15 entre les mécanismes 13 des adaptateurs d'une rangée de direction radiale par rapport au couvercle 1, on démonte les mécanismes 13 de trois adaptateurs de la rangée radiale, les emplacements de ces mécanismes 13 qui ont été démontés étant représentés en traits interrompus sur la figure 3 et on a ainsi accès à l'adaptateur central 3' à partir du bord du couvercle.

Il est bien évident que dans le cas du remplacement d'un adaptateur situé à la périphérie du couvercle, il n'est pas nécessaire d'effectuer le démontage des mécanismes d'autres adaptateurs.

De manière générale, on peut démonter un nombre de mécanismes quelconque pour faciliter l'accès à l'adaptateur dont on effectue le remplacement.

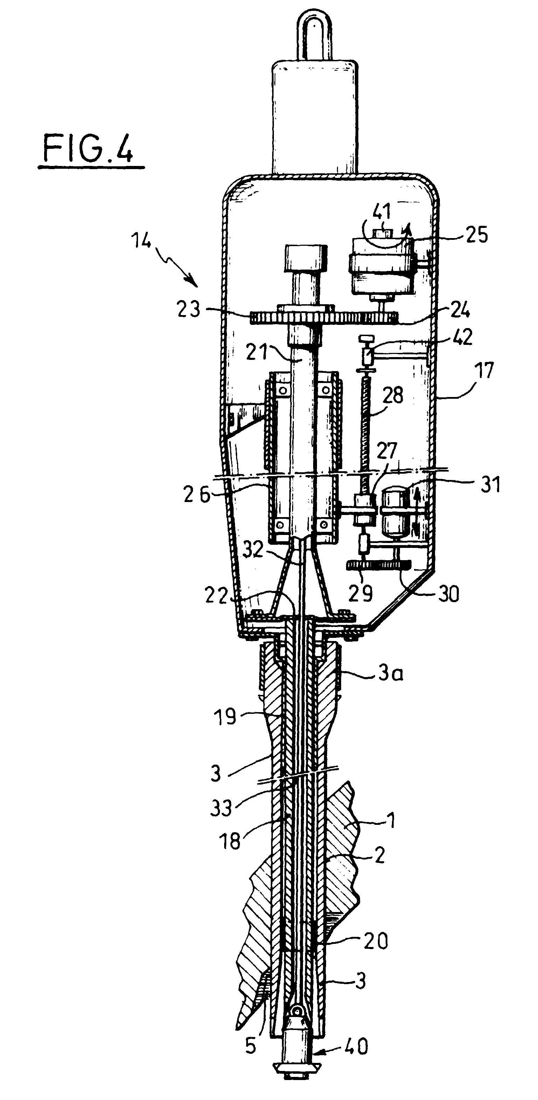

Comme il est visible sur la figure 4 qui représente un mode de réalisation de la machine donné uniquement à titre d'exemple non limitatif, la machine 14 peut comporter un carter 17 et une colonne 18 montée rotative autour de son axe par rapport au carter 17, dans le prolongement du carter 17, vers le bas.

Le carter 17 comporte une partie inférieure tubulaire 19 qui peut être engagée dans la partie supérieure d'un adaptateur 3 pratiquement sans jeu pour assurer le maintien du carter 17 sur la partie supérieure 3a de l'adaptateur 3 qui comporte un alésage présentant un épaulement sur lequel vient reposer le support tubulaire 19.

En outre, la colonne 18 de la machine 14 comporte une bague 20 dans laquelle la colonne 18 est montée rotative et qui permet le guidage de la colonne 18 suivant la direction axiale, à l'intérieur de l'adaptateur 3.

La colonne 18 est également montée rotative et glissante à l'intérieur du support tubulaire 19 du carter 17.

A l'intérieur du carter 17, est monté rotatif, dans une direction axiale alignée avec la direction de l'axe de l'adaptateur 3, un arbre tubulaire 21 relié par l'intermédiaire d'une platine 22, à sa partie inférieure, à l'extrémité supérieure de la colonne 18.

L'arbre tubulaire 21 qui est monté à l'intérieur de paliers à roulement est solidaire d'un pignon d'entraînement 23 qui engrène avec un pignon 24 fixé sur l'arbre de sortie d'un motoréducteur 25 monté dans le carter 17.

De cette manière, l'arbre tubulaire 21 et la colonne 18 peuvent être entraînés en rotation autour de leur axe commun.

L'arbre tubulaire 21 est cannelé extérieurement et engagé dans une bague comportant des cannelures internes correspondantes, solidaire du pignon 23 et montée rotative dans le carter 17 par l'intermédiaire d'un palier à roulement. De cette manière, l'arbre tubulaire 21 est solidaire en rotation et libre en translation axiale par rapport au pignon 23.

L'arbre tubulaire 21 est monté rotatif dans un support tubulaire 26 lui-même monté glissant dans la direction axiale à l'intérieur du carter 17.

Le support tubulaire 26 porte extérieurement un écrou 27 dont l'axe est parallèle à l'axe de l'arbre tubulaire 21.

Une vis 28 engrenant avec l'écrou 27 et dirigée suivant la direction axiale est montée rotative dans le carter 17 et solidaire à son extrémité d'un pignon 29 engrenant avec un pignon 30 fixé sur l'arbre de sortie d'un motoréducteur 31.

Le motoréducteur 31 assure la mise en rotation de la vis 28 qui entraîne le support tubulaire 26 et l'arbre 21 en translation axiale par l'intermédiaire de l'écrou 27.

Un vérin pneumatique 32 disposé à l'intérieur de l'arbre tubulaire 21 comporte une tige reliée par l'intermédiaire d'une barre de transmission 33 disposée à l'intérieur de la colonne tubulaire 18, à un outil d'alésage 40 venant s'engager dans la partie d'extrémité de la colonne 18, de manière à être solidaire en rotation de la colonne 18.

On peut ainsi réaliser l'entraînement en rotation de l'outil 40 et son déplacement axial, de manière à réaliser l'usinage de la partie d'extrémité inférieure de l'adaptateur 3 et d'une partie de la soudure 5.

L'usinage est réalisé en mettant en rotation grâce au motoréducteur 25 et en déplaçant en translation dans la direction axiale l'outil 40, par l'intermédiaire de la colonne 18, grâce au motoréducteur 31.

L'outil est de plus maintenu par la barre de transmission 33 reliée à la tige du vérin pneumatique 32.

Après la mise en place de la machine d'usinage 14, comme représenté sur les figures 2 et 3, on équipe la partie inférieure de la colonne 18 d'un outil 40 permettant de réaliser le fraisage de la partie inférieure de l'adaptateur 3 et le réalésage de la soudure 5 et d'une partie de l'ouverture de traversée 2 du couvercle de cuve 1.

L'outil d'alésage 40 est fixé à l'extrémité de la colonne 18, par l'intérieur de l'enceinte de protection biologique 11 représentée sur la figure 2, à travers l'ouverture 12. Cette opération peut être réalisée très rapidement, l'outil 40 comportant des moyens d'assemblage rapide à l'extrémité de la colonne 18 et à la barre 33 solidaire de la tige du vérin 32.

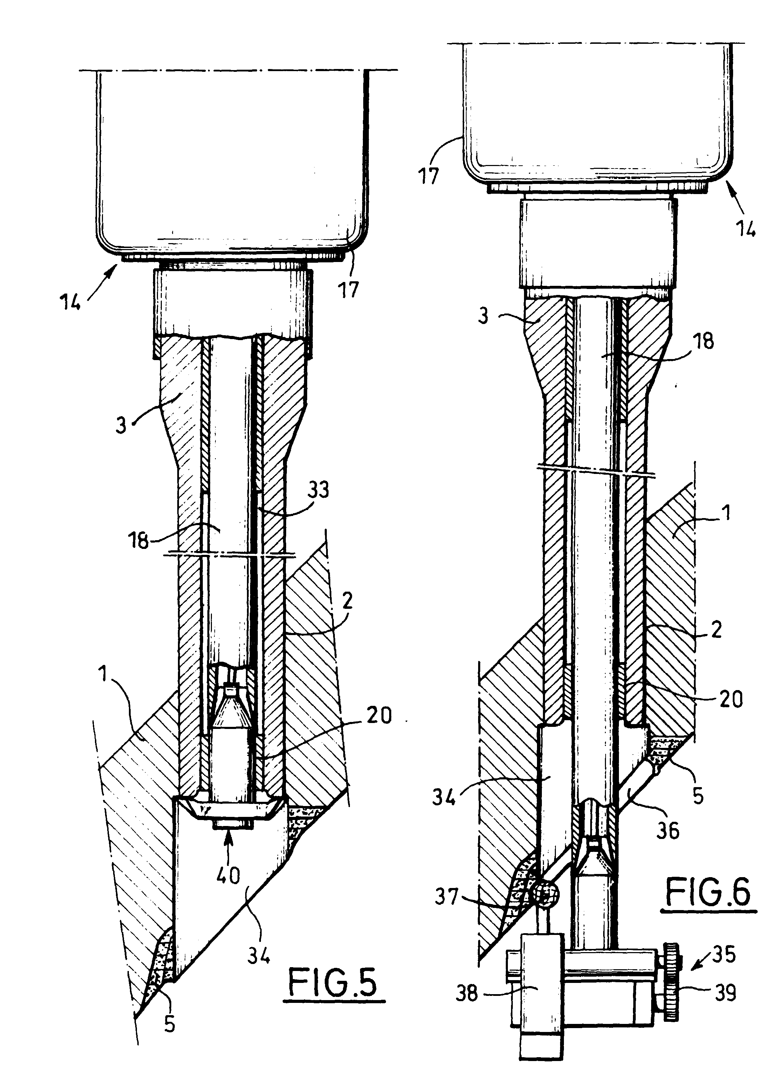

Comme il est visible sur la figure 5, sur laquelle les organes équipant la machine 14 ont été représentés dans la position qu'ils occupent en fin d'usinage de la partie inférieure de l'adaptateur, le diamètre d'alésage de l'outil 40 est légèrement supérieur au diamètre extérieur de l'adaptateur 3 et au diamètre nominal de l'ouverture 2.

L'alésage 34 réalisé par l'outil 40 permet d'éliminer intégralement sous forme de copeaux la partie inférieure de l'adaptateur 3 jusqu'à un certain niveau à l'intérieur du couvercle 1, une partie de la soudure 5 au contact de la paroi extérieure de l'adaptateur et éventuellement une peau interne de faible épaisseur de l'ouverture 2 de traversée de l'adaptateur.

Après qu'on ait réalisé l'alésage 34, comme représenté sur la figure 5, on démonte l'outil 40 et on réalise, par le dessous de l'enceinte de protection biologique 11, le montage d'un dispositif de mesure à l'extrémité de la colonne 18.

L'outil de mesure est utilisé pour déterminer de manière extrêmement précise la position de la surface inférieure de la soudure restante 5, afin de réaliser le réglage d'une opération d'usinage d'un chanfrein de soudage à l'intérieur de la soudure 5, pour la fixation de l'adaptateur de remplacement. On détermine en particulier de manière très précise, la position d'un point constituant la référence et l'origine pour le démarrage de l'usinage du chanfrein.

Sur la figure 6, on a représenté un outil 35 d'usinage d'un chanfrein dans le métal de la soudure 5, de manière à réaliser le soudage de l'adaptateur de remplacement.

Le montage de l'outil d'usinage 35 à l'extrémité de la colonne 18 de la machine 14 est réalisé par l'intérieur de l'enceinte de protection biologique 11, à travers l'ouverture 12.

En fonction de la position de référence et d'origine déterminée précédemment, on règle la machine d'usinage 35 pour commencer l'usinage du chanfrein 36.

L'outil d'usinage 35 comporte une tête de fraisage 37 fixée sur l'arbre de sortie d'un motoréducteur 38 monté sur le support de l'outil 35.

L'outil 35 comporte des moyens 39 de réglage par pignons de la position de la tête de fraisage 37.

Le chanfrein 36 doit être réalisé dans une position inclinée par rapport au plan horizontal et suivant une forme complexe qui est fonction de la forme de la soudure 5 remplissant le chanfrein d'origine usiné autour de l'ouverture de traversée 2, dans le métal du couvercle 1.

Suivant la distance de l'adaptateur 3 à l'axe du couvercle 1, le chanfrein rempli par la soudure 5 est plus ou moins incliné et présente une forme plus ou moins complexe, ce qui nécessite d'adapter les conditions d'usinage du chanfrein 36 à l'intérieur de la soudure 5 à la position de l'adaptateur 3.

L'outil 35 et la tête de fraisage 37 sont mis en rotation autour de l'axe de l'adaptateur 3 et la tête de fraisage 37 est déplacée simultanément et de manière réglée dans la direction axiale de l'adaptateur 3, pour suivre la surface de la soudure 5 dans laquelle l'usinage du chanfrein 36 est réalisé.

Ces déplacements sont contrôlés par des codeurs associés aux moyens de déplacement de la colonne 18 à l'extrémité de laquelle est fixé l'outil 35 dont le réglage peut être réalisé préalablement à l'opération d'usinage, en utilisant les moyens 39.

Après qu'on ait réalisé l'usinage du chanfrein 36, on démonte l'outil 35 et l'on équipe la machine 14 d'une barre d'alésage 43 portant à son extrémité une tête d'alésage 44.

La barre d'alésage 43 est montée rotative et glissante dans la direction axiale à l'intérieur de l'alésage de l'adaptateur 3 par l'intermédiaire d'un palier 45.

La tête d'alésage 44 réalise un alésage 46 à l'intérieur de la partie supérieure de l'adaptateur dont le diamètre est légèrement inférieur au diamètre extérieur de l'adaptateur 3, de sorte qu'il subsiste après alésage de la partie supérieure de l'adaptateur, une fine paroi tubulaire 47, à l'intérieur de l'ouverture 2 traversant le couvercle de la cuve 1.

De manière avantageuse, l'épaisseur de la paroi résiduelle 47 est très faible et par exemple de l'ordre de 0,5 mm.

On adjoint à la machine 14 des moyens de maintien latéral 64 de la partie supérieure de l'adaptateur 3 qui n'est plus maintenue dans l'ouverture 2, à la fin du réalésage, que par la paroi 47. Les moyens de maintien de la machine et de l'adaptateur permettent d'éviter une rupture ou une flexion de la paroi mince 47 encore engagée dans l'ouverture 2.

La paroi 47 reste maintenue par frettage à l'intérieur de l'ouverture 2, de sorte que l'extraction complète de l'adaptateur 3 à remplacer ne peut être effectuée sans risquer d'entraîner une rupture par traction de la paroi 47 ou une détérioration de la paroi interne de l'ouverture 2.

Préalablement à l'extraction de la paroi 47 de faible épaisseur, on réalise par le dessus du couvercle, une déformation de cette paroi en utilisant des vérins de compression venant en prise avec la surface externe de la paroi 47, dans sa partie située à l'extérieur et juste au-dessus du couvercle 1.

On réalise une déformation par compression par enfoncement de la paroi 47 vers l'intérieur, de façon à la détensionner et à la décoller de la paroi de l'ouverture 2, de sorte que son extraction peut être réalisée très facilement, sans détériorer la surface de l'alésage.

L'ouverture 2 traversant le couvercle 1 peut alors recevoir un adaptateur de remplacement qui est introduit et mis en place à l'intérieur de l'ouverture 2 à la température de l'azote liquide. L'adaptateur de remplacement est maintenu en position dans l'ouverture 2 pendant son réchauffement, la dilatation correspondante se traduisant par un frettage de l'adaptateur de remplacement à l'intérieur de l'ouverture 2.

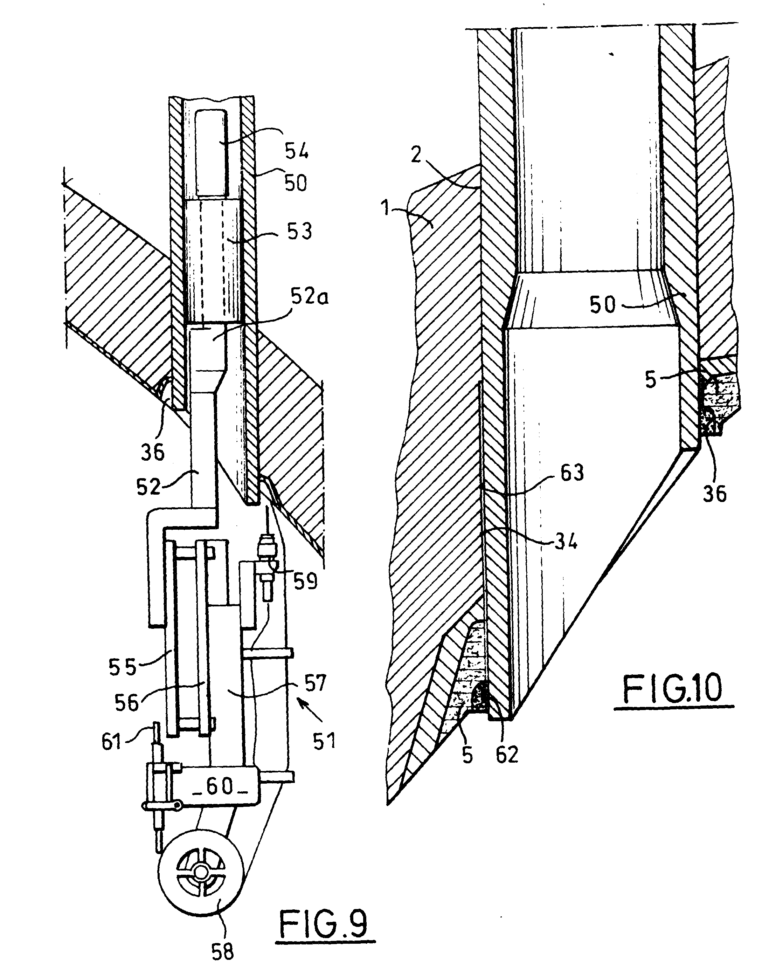

Sur la figure 8, on a représenté l'adaptateur de remplacement 50 en position à l'intérieur de l'ouverture 2 de traversée du couvercle 1 et maintenu par frettage à l'azote.

On a également représenté la machine 14 qui a été mise en position sur l'adaptateur 50, de manière que sa colonne 18 soit montée rotative et glissante dans la direction axiale à l'intérieur de l'alésage de l'adaptateur de remplacement 50.

On a fixé par le dessous du couvercle, à l'extrémité de la colonne 18, une machine de soudage TIG automatique 48 permettant de réaliser le remplissage du chanfrein 36 en métal d'apport, afin de réaliser le soudage et d'assurer l'étanchéité autour de l'adaptateur 50.

Le chanfrein 36 a été usiné avec une section telle qu'il peut être rempli par des passes successives de soudage superposées les unes aux autres dans la direction axiale. Un tel soudage est désigné habituellement sous l'appellation soudage à chanfrein étroit.

Comme indiqué dans une précédente demande de brevet de la Société FRAMATOME déposée sous le numéro FR-A-93-00980 et correspondant à la demande EP-A-0 609 108 publiée le 03.08.1994, un tel soudage à chanfrein, étroit, dans le cas d'un adaptateur dont le chanfrein 36 est incliné doit être réalisé en faisant varier la vitesse de rotation de la tête de soudage 49 autour de l'axe de l'adaptateur, pendant le soudage, afin d'assurer une vitesse constante de dépôt du métal d'apport.

De plus, la tête de soudage doit être déplacée simultanément en rotation et en translation suivant la direction axiale de l'adaptateur 50, pour suivre la forme du chanfrein de soudage 36.

Le réglage des déplacements de la tête de soudage 49 peut être assuré par les moyens de contrôle de la machine 14.

Sur la figure 9, on a représenté une variante du dispositif de soudage utilisé pour réaliser le remplissage du chanfrein 36.

La machine de soudage 51 est suspendue à une pièce de support 52 dont la partie supérieure 52a constitue un axe de rotation monté à l'intérieur d'un palier 53 qui peut être fixé et bloqué dans l'alésage de l'adaptateur 50, ce montage pouvant être effectué par le dessous du couvercle, depuis l'intérieur de l'enceinte de protection biologique 11.

L'axe 52a est relié à l'arbre de sortie d'un motoréducteur 54 fixé sur le support du palier 53. Le motoréducteur 54 comporte des moyens de commande permettant de faire varier et de régler sa vitesse de rotation pendant le soudage.

Sur le support 52 est monté, par l'intermédiaire d'un dispositif de réglage 55, une glissière 56 sur laquelle est monté mobile dans la direction verticale un chariot 57 portant une tête de soudage TIG 59.

Le chariot 57 porte également un support 60 sur lequel sont fixés une bobine 58 d'alimentation de la tête 59 en fil de métal d'apport et des moyens d'accrochage du câble 61 d'alimentation de la tête de soudage en courant électrique.

Sur la figure 10, on a représenté la partie inférieure de l'adaptateur de remplacement 50, à l'issue de l'opération de soudage qui vient d'être décrite.

Un cordon de soudure en métal d'apport 62 a été déposé dans le chanfrein 36 usiné dans le métal de la soudure 5. Au-dessus de la soudure 62, il subsiste un interstice 63 entre la surface extérieure de l'adaptateur 50 et la surface intérieure de l'alésage 34, du fait que l'alésage 34 est légèrement plus grand que l'ouverture 2. Malgré la présence de cet interstice 63, l'adaptateur 50 est parfaitement fixé par frettage et par la soudure 62.

Comme il est visible sur la figure 10, l'alésage 34 est usiné sur une longueur axiale de l'ouverture 2 telle que l'adaptateur 50 ne se trouve nulle part en contact avec la partie restante de la soudure 5 de l'adaptateur dont on a effectué le remplacement.

Le procédé suivant l'invention permet de réaliser toutes les opérations nécessaires au remplacement depuis une zone située au-dessus du couvercle 1, à l'exception d'opérations de montage et de démontage des outils qui sont réalisées depuis l'enceinte de protection biologique, en-dessous du couvercle.

En outre, le remplacement de l'adaptateur peut être réalisé de manière plus simple et plus rapide qu'en accédant à l'adaptateur par le dessous du couvercle.

L'invention ne se limite pas au mode de réalisation qui a été décrit.

C'est ainsi qu'on peut utiliser des outils ayant une forme différente de ceux qui ont été décrits pour réaliser les différentes opérations d'usinage ou de soudage.

L'invention s'applique au remplacement de tout adaptateur de traversée du couvercle de la cuve d'un réacteur nucléaire.

## Revendications

1. Procédé de remplacement d'un adaptateur (3) de traversée du couvercle (1) de la cuve d'un réacteur nucléaire de forme bombée, disposé après démontage, de manière à présenter une surface externe convexe (1a) dirigée vers le haut et une surface interne concave (1b) dirigée vers le bas, chacun des adaptateurs (3) ayant une disposition verticale et étant fixé dans une ouverture (2) de traversée du couvercle (1) par une soudure (5) au voisinage de la face interne concave (1b) et portant un équipement (13, 4) reposant sur une extrémité de l'adaptateur (3, 3') saillante à l'extérieur du couvercle (1), le procédé consistant à usiner une partie inférieure de l'adaptateur (3) à remplacer, au voisinage de la surface interne (1b) du couvercle (1) et une partie au moins de la soudure (5) de fixation de l'adaptateur (3), à extraire l'adaptateur (3) à remplacer de l'ouverture (2) du couvercle (1), à introduire et à fixer un adaptateur (50) de remplacement dans l'ouverture et à souder l'adaptateur (50) de remplacement sur le couvercle, caractérisé par le fait que le remplacement est réalisé depuis une zone d'intervention située au-dessus de la face convexe (la) du couvercle et qu'on effectue l'une au moins des opérations d'usinage de l'adaptateur à remplacer (3') après démontage de l'équipement (4, 13) reposant sur son extrémité supérieure et/ou de soudage de l'adaptateur de remplacement (50), en introduisant un moyen d'intervention (14) par l'extrémité supérieure de l'adaptateur à remplacer (3') ou l'adaptateur de remplacement (50).

2. Procédé suivant la revendication 1, caractérisé par le fait que l'équipement reposant sur la partie supérieure (3a) de l'adaptateur à remplacer (3') est constitué par un mécanisme (13) de commande d'une grappe de contrôle de réactivité et par une manchette thermique (4) disposée à l'intérieur de l'adaptateur (3').

3. Procédé suivant la revendication 2, caractérisé par le fait que, pour réaliser la mise en place du moyen d'intervention (14) dans l'adaptateur à remplacer (3'), on réalise le démontage d'au moins un mécanisme de commande (13) reposant sur un adaptateur (3) différent de l'adaptateur (3') dont on effectue le remplacement.

4. Procédé suivant l'une quelconque des revendications 1 à 3, caractérisé par le fait qu'on réalise le montage d'une partie du moyen d'intervention (14) par le dessous du couvercle, de manière manuelle, par l'intérieur d'une enceinte de protection biologique (11).

5. Procédé suivant l'une quelconque des revendications 1 à 4, caractérisé par le fait que l'élimination par usinage de la partie inférieure de l'adaptateur à remplacer (3') et d'une partie de la soudure (5) est effectuée au moyen d'un outil d'alésage (40).

6. Procédé suivant l'une quelconque des revendications 1 à 5, caractérisé par le fait qu'on usine un chanfrein étroit (36) dans le métal de la soudure (5), après élimination par usinage de la partie inférieure de l'adaptateur (3') à remplacer et d'une partie de la soudure (5).

7. Procédé suivant la revendication 6, caractérisé par le fait qu'on réalise une soudure par dépôt de métal d'apport dans le chanfrein étroit (36) en utilisant une tête de soudage (49; 59) mise en rotation à une vitesse variable pendant le soudage.

8. Procédé suivant l'une quelconque des revendications 1 à 7, caractérisé par le fait qu'après élimination par usinage de la partie inférieure de l'adaptateur (3') et d'une partie de la soudure (5) de l'adaptateur à remplacer, on effectue un réalésage de la partie de l'adaptateur (3') restante à l'intérieur de l'ouverture (2) du couvercle.

9. Procédé suivant la revendication 8, caractérisé par le fait qu'après le réalésage de la partie restante de l'adaptateur (3), on réalise une compression d'une paroi résiduelle (47) de l'adaptateur (3) obtenue après réalésage, de manière à séparer la paroi (47) de l'ouverture (2) de traversée du couvercle (1).

10. Procédé suivant la revendication 1, caractérisé par le fait :
- qu'on place le couvercle (1) sur un stand de réparation (6) avec la surface externe convexe (1a) du couvercle (1) dirigée vers le haut,
- qu'on démonte l'équipement (4, 13) reposant sur la partie supérieure de l'adaptateur (3') dont on effectue le remplacement,
- qu'on met en place sur la partie supérieure de l'adaptateur (3') le moyen d'intervention (14) dont une partie au moins est introduite dans l'alésage de l'adaptateur (3'),
- qu'on fixe un premier outil d'usinage (40) à la partie du moyen d'intervention (14) introduite dans l'adaptateur (3'), par le dessous du couvercle 1,
- qu'on élimine par usinage une partie inférieure de l'adaptateur (3') et une partie de la soudure (5),
- qu'on remplace le premier outil d'usinage (40) par un second outil (35) et qu'on usine un chanfrein de soudage (36) dans une partie restante de la soudure (5),
- qu'on remplace le second outil d'usinage par un troisième outil (44) et qu'on réalèse la partie de l'adaptateur (3') restant dans l'ouverture (2) du couvercle de cuve (1),
- qu'on comprime la partie réalésée de l'adaptateur (3') restant dans l'ouverture (2) du couvercle (1) et qu'on extrait la partie restante de l'adaptateur (3, 3') de l'ouverture (2) du couvercle (1),
- qu'on met en place à une basse température et qu'on frette dans l'ouverture (2) l'adaptateur de remplacement (50), et
- qu'on remplit le chanfrein de soudage (36) de métal d'apport.

11. Dispositif pour la mise en oeuvre du procédé suivant l'une quelconque des revendications 1 à 10, caractérisé par le fait que le moyen d'intervention (14) comporte un carter (17) muni de moyens (19) de fixation et de centrage dans la partie supérieure de l'adaptateur (3, 3'),
- une colonne tubulaire (18) montée rotative autour de son axe sur le carter (17) et présentant un diamètre externe inférieur au diamètre de l'alésage de l'adaptateur (3, 3'),
- des moyens (23-25, 27-31) de déplacement de la colonne tubulaire (18) en translation suivant son axe et en rotation autour de son axe, disposés dans le carter (17),
- des moyens (41, 42) de contrôle des déplacements de la colonne tubulaire (18), et
- des moyens (32, 33) de fixation et de retenue d'un outillage (40, 35 44, 48, 51) à une extrémité de la colonne (18) opposée au carter (17).

## Patentansprüche

1. Verfahren zum Austauschen eines Zwischenstückes (3) für den Durchtritt durch die Haube (1) eines Kernreaktorgehäuses mit gewölbter Form, die nach Demontage so angeordnet ist, daß eine äußere konvexe Oberfläche (1a) nach oben und eine innere konkave Oberfläche (1b) nach unten zeigt, wobei jedes der Zwischenstücke (3) vertikal angeordnet und in einer Durchtrittsöffnung (2) der Haube (1) durch eine Schweißnaht (5) in Nachbarschaft zur inneren konkaven Fläche (1b) befestigt ist und eine Ausrüstung (13, 4) trägt, die auf einem Ende des Zwischenstücks (3, 3') ruht, welches nach außen aus der Haube (1) hervorspringt, wobei das Verfahren darin besteht, einen zu ersetzenden unteren Teil des Zwischenstücks (3') in der Nachbarschaft zur inneren Oberfläche (1b) der Haube (1) und wenigstens einen Teil der Schweißnaht (5) zum Festhalten des Zwischenstücks (3) spanabhebend zu bearbeiten, das zu ersetzende Zwischenstück (3') aus der Öffnung (2) der Haube (1) zu entfernen, ein Austauschzwischenstück (50) in die Öffnung einzuführen und zu fixieren und das Austauschzwischenstück (50) mit der Haube zu verschweißen,
dadurch gekennzeichnet, daß
der Austausch von einer Eingriffszone her erfolgt, die sich außerhalb der konvexe- Fläche (la) der Haube befindet, und daß wenigstens einer der Arbeitsschritte zur spanabhebenden Bearbeitung des zu ersetzenden Zwischenstücks (3') nach Demontage der Ausrüstung (4, 13) an dessen oberem Ende und/oder das Verschweißen des Austauschzwischenstücks (50) dadurch erfolgt, daß eine Eingriffsvorrichtung (14) durch das obere Ende des zu ersetzenden Zwischenstückes (3') oder des Austauschzwischenstückes (50) eingeführt wird.

2. Verfahren nach Anspruch 1, dadurch gekennzeichnet, daß die auf dem oberen Teil (3a) des zu ersetzenden Zwischenstückes (3') ruhende Ausrüstung aus einem Mechanismus (13) zum Betätigen einer Reaktivitätssteuereinheit und einer Wärmemanschette (4) im Inneren des Zwischenstückes (3') besteht.

3. Verfahren nach Anspruch 2, dadurch gekennzeichnet, daß zum Einsatz der Eingriffsvorrichtung (14) in dem zu ersetzenden Zwischenstück (3') die Demontage wenigstens eines Steuermechanismus (13) an einem Zwischenstück (3) durchgeführt wird, das sich von dem Zwischenstück (3') unterscheidet, dessen Austausch man durchführt.

4. Verfahren nach einem der Ansprüche 1 bis 3, dadurch gekennzeichnet, daß die Montage eines Teils der Eingriffsvorrichtung (14) von unterhalb der Haube manuell aus einer Ummantelung zum biologischen Schutz (11) heraus vorgenommen wird.

5. Verfahren nach einem der Ansprüche 1 bis 4, dadurch gekennzeichnet, daß die Entfernung durch spanabhebende Bearbeitung des unteren Teils des zu ersetzenden Zwischenstücks (3') und eines Teils der Schweißnaht (5) mit einem Ausbohrmeißel (40) vorgenommen wird.

6. Verfahren nach einem der Ansprüche 1 bis 5, dadurch gekennzeichnet, daß man nach Entfernung des unteren Teils des zu ersetzenden Zwischenstücks (3') eine enge Seitenfase (36) in dem Metall der Schweißnaht (5) und in einem Teil der Schweißnaht (5) spanabhebend herausarbeitet.

7. Verfahren nach Anspruch 6, dadurch gekennzeichnet, daß die Schweißnaht durch Ablagerung von Schweißzusatzwerkstoff in der engen Seitenfase (36) unter Verwendung eines Schweißkopfes (49; 59) erzeugt wird, der mit veränderbarer Geschwindigkeit während des Verschweißens in Drehung versetzt wird.

8. Verfahren nach einem der Ansprüche 1 bis 7, dadurch gekennzeichnet, daß nach Entfernung des unteren Teils des Zwischenstückes (3') und eines Teils der Schweißnaht (5) des zu ersetzenden Zwischenstückes durch spanabhebende Bearbeitung der stehengebliebene Teil des Zwischenstückes (3') innerhalb der Öffnung (2) der Haube ausgebohrt wird.

9. Verfahren nach Anspruch 8, dadurch gekennzeichnet, daß nach dem Ausbohren des stehengebliebenen Teils des Zwischenstücks (3) eine Restwand (47) des Zwischenstücks (3) nach dem Ausbohren so zusammengedrückt wird, daß die Wand (47) von der Durchtrittsöffnung (2) der Haube (1) getrennt wird.

10. Verfahren nach Anspruch 1, dadurch gekennzeichnet, daß:
- die Haube (1) auf einen Reparaturstand (6) mit der äußeren konvexen Oberfläche (la) der Haube (1) nach oben gebracht wird,
- die Ausrüstung (4, 13) an dem oberen Teil des Zwischenstücks (3'), das ausgetauscht wird, demontiert wird,
- auf dem oberen Teil des Zwischenstücks (3') die Eingriffsvorrichtung (14) angeordnet wird, wobei wenigstens ein Teil in die Ausbohrung des Zwischenstücks (3') eingeführt wird,
- ein erstes spanabhebendes Werkzeug (40) an dem Teil der Eingriffsvorrichtung (14) von unterhalb der Haube (1) befestigt wird, die in das Zwischenstück (3') eingeführt ist,
- durch spanabhebende Bearbeitung ein unterer Teil des Zwischenstücks (3') und ein Teil der Schweißnaht (5) entfernt wird,
- das erste spanabhebende Werkzeug (40) durch ein zweites Werkzeug (35) ersetzt wird und eine Seitenfase für die Schweißnaht (36) in einem stehengebliebenen Teil der Schweißnaht (5) spanabhebend herausgearbeitet wird,
- das zweite spanabhebende Werkzeug durch ein drittes Werkzeug (44) ersetzt wird und der Teil des Zwischenstücks (3') herausgebohrt wird, der in der Öffnung (2) der Haube des Gehäuses (1) stehengeblieben ist,
- der herausgebohrte Teil des Zwischenstücks (3'), der in der Öffnung (2) der Haube (1) stehengeblieben ist, zusammengedrückt wird und der stehengebliebene Teil des Zwischenstücks (3, 3') aus der Öffnung (2) der Haube (1) herausgenommen wird,
- bei niedriger Temperatur in der Öffnung (2) ein Austauschzwischenstück (50) aufgeschrumpft wird, und
- die Seitenfase für die Schweißnaht (36) mit Schweißzusatzmittel gefüllt wird.

11. Vorrichtung zur Ausführung des Verfahrens nach einem der Ansprüche 1 bis 10, dadurch gekennzeichnet, daß die Eingriffsvorrichtung (14) umfaßt:
- ein Gehäuse (17) mit Befestigungs- und Zentriervorrichtungen (19) in dem oberen Teil des Zwischenstücks (3, 3'),
- eine Rohrstütze (18), die drehbar um ihre Achse auf dem Gehäuse (17) montiert ist und einen Außendurchmesser hat, der kleiner als der Ausbohrdurchmesser des Zwischenstücks (3, 3') ist,
- Vorrichtungen (23 - 25, 27 - 31) zur Bewegung der Rohrstütze (18) in Richtung ihrer Achse und zur Rotation um ihre Achse, die sich in dem Gehäuse (17) befinden,
- Vorrichtungen (41, 42) zur Steuerung der Verschiebung der Rohrstütze (18) und
- Vorrichtungen (32, 33) zur Fixierung und zum Festhalten eines Werkzeuges (40, 35, 44, 48, 51) an einem Ende der Stütze (18) gegenüber dem Gehäuse (17).

## Claims

1. Process for replacing an adaptor (3) passing through the cover (1) of the vessel of a nuclear reactor having a cambered shape and positioned, after dismantling, in such a way as to have an upwardly directed, convex, outer surface (1a) and a downwardly directed, inner, concave surface (1b), each of the adaptors (3) having a vertical positioning and being fixed in a passage opening (2) of the cover (1) by a weld (5) in the vicinity of the inner, concave face (1b) and carrying an equipment (13, 4) resting on one end of the adaptor (3, 3') projecting to the exterior of the cover (1), the process consisting of machining a lower portion of the adaptor (3') to be replaced, in the vicinity of the inner surface (1b) of the cover (1) and at least one portion of the weld (5) for fixing the adaptor (3), extracting the adaptor (3') to be replaced from the opening (2) of the cover (1), introducing and fixing the replacement adaptor (50) in the opening and welding the replacement adaptor (50) on the cover, characterized in that replacement takes place from an intervention zone positioned above the convex face (1a) of the cover and at least one of the machining operations of the adaptor (3') to be replaced takes place following the dismantling of the equipment (4, 13) resting on its upper end and/or welding the replacement adaptor (50), by introducing an intervention means (14) through the upper end of the replaced adaptor (3') or the replacement adaptor (50).

2. Process according to claim 1, characterized in that the equipment resting on the upper portion (3a) of the adaptor (3') to be replaced is constituted by a control mechanism (13) of a reactivity checking means and by a thermal sleeve (4) located within the adaptor (3').

3. Process according to claim 2, characterized in that, for putting into place the intervention means (14) in the adaptor (3') to be replaced, dismantling takes place of at least one control mechanism (13) resting on an adaptor (3) differing from the adaptor (3'), which is being replaced.

4. Process according to any one of the claims 1 to 3, characterized in that fitting takes place of part of the intervention means (14) from below the cover in manual manner, via the interior of a biological protection enclosure (11).

5. Process according to any one of the claims 1 to 4, characterized in that the elimination by machining of the lower portion of the adaptor (3') to be replaced and part of the weld (5) takes place by means of a boring tool (40).

6. Process according to any one of the claims 1 to 5, characterized in that a narrow chamfer (36) is machined in the metal of the weld (5), following the elimination by machining of the lower portion of the adaptor (3') to be replaced and a portion of the weld (5).

7. Process according to claim 6, characterized in that a weld is produced by depositing filler metal in the narrow chamfer (36) using a welding head (49, 59) rotated at variable speed during welding.

8. Process according to any one of the claims 1 to 7, characterized in that following the elimination by machining of the lower portion of the adaptor (3') and a portion of the weld (5) of the adaptor to be replaced, reboring takes place to the portion of the adaptor (3') remaining within the opening (2) of the cover.

9. Process according to claim 8, characterized in that after reboring the residual portion of the adaptor (3), a compression takes place to a residual wall (47) of the adaptor (3) obtained after reboring, so as to separate the wall (47) from the passage opening (2) of the cover (1).

10. Process according to claim 1, characterized in that:
- the cover (1) is placed on a repair stand (6) with its outer, convex surface (la) directed upwards,
- the equipment (4, 13) resting on the upper portion of the adaptor (3') being replaced is dismantled,
- on the upper portion of the adaptor (3') is placed the intervention means (14), whereof at least one part is introduced into the bore of the adaptor (3'),
- a first machining tool (40) is fixed on the part of the intervention means (14) introduced into the adaptor (3') from the bottom of the cover (1),
- by machining a lower portion of the adaptor (3') and a portion of the weld (5) is eliminated,
- the first machining tool (40) is replaced by a second tool (35) and a welding chamfer (36) is machined in a residual portion of the weld (5),
- the second machining tool is replaced by a third tool (44) and reboring takes place to the portion of the adaptor (3') remaining in the opening (2) of the vessel cover (1),
- the rebored portion of the adaptor (3') remaining in the opening (2) of the cover (1) is compressed and the remaining portion of the adaptor (3, 3') is extracted from the opening (2) of the cover (1),
- the replacement adaptor (50) is put into place at low temperature and hooped in the opening (2) and
- the welding chamfer (36) is filled with filler metal.

11. Apparatus for performing the process according to any one of the claims 1 to 10, characterized in that the intervention means (14) has a casing (17) provided with means (19) for fixing and centring in the upper portion of the adaptor (3, 3'),
- a tubular column (18) fitted so as to rotate about its axis on the casing (17) and having an external diameter smaller than the diameter of the bore of the adaptor (3, 3'),
- means (23, 25, 27, 31) for the displacement of the tubular column (18) in translation along its axis and in rotation about its axis, located in the casing (17),
- means (41, 42) for checking the displacements of the tubular column (18) and
- means (32, 33) for fixing and retaining a tool system (40, 35, 44, 48, 51) at one end of the column (18) opposite to the casing (17).
